# FASCICULE DE BREVET EUROPEEN

(11) **EP 0 469 162 B1**
(45) Date de publication et mention de la délivrance du brevet: **04.10.1995**
(21) Numéro de dépôt: 90114402.2
(22) Date de dépôt: 27.07.1990
(51) Int. Cl.: A47J 31/40

(54) **Dispositif d'extraction de cartouches fermées**
Aufbrühvorrichtung für geschlossene Portionspackungen
Extraction device for closed cartridges

(43) Date de publication de la demande: 05.02.1992
(73) Titulaire: SOCIETE DES PRODUITS NESTLE S.A., 1800 Vevey (CH)
(72) Inventeur: Fond, Olivier, CH-1400 Yverdon (CH)

(56) Documents cités:
- EP-A- 0 070 403
- EP-A- 0 242 556
- DE-U- 7 430 109

## Description

L'invention concerne un dispositif d'extraction de cartouches fermées, prévues pour la confection d'une boisson, dans un porte-cartouches pour machine à café, comprenant un organe d'injection et sur le pourtour de l'organe d'injection une surface circulaire perpendiculaire audit organe d'injection et constituée d'une matière assurant l'étanchéité lors de l'extraction de la cartouche fermée.

Le brevet EP 242 556 concerne un dispositif d'extraction de cartouches, comprenant un corps cylindrique creux ayant une forme intérieure épousant sensiblement la forme extérieure de la cartouche à extraire, ledit corps comportant à sa partie supérieure suivant l'axe dudit cylindre un organe d'injection et sur sa partie extérieure un ressort maintenant une bague pour le dégagement de la cartouche en fin d'extraction. Un tel dispositif permet d'obtenir un café de bonne qualité, mais il n'est utilisable qu'avec un seul type et une forme de cartouche parfaitement adaptable à la forme intérieure du cylindre creux.

Le Modèle d'utilité DE-GM 7430109 concerne une machine à café électrique pour préparer du café à partir de capsules en papier filtre. Ce système ne nécessite aucun système de solidarisation spécial du porte-cartouches avec le reste de la machine. Le brevet EP 70403 concerne également une machine à café pour extraire des capsules à base de papier filtre. Il n'y a dans ce cas, aucun système de perforation de la partie supérieure de la capsule.

Le dispositif d'extraction selon la présente invention est d'un usage beaucoup plus universel permettant d'extraire des capsules de différentes formes et tailles, il est de conception relativement simple et assure de manière certaine une bonne reproductibilité d'extraction de cartouches fermées.

La présente invention concerne un dispositif d'extraction de cartouches fermées, prévues pour la confection d'une boisson, dans un porte-cartouches pour machine à café comprenant une cage de fixation avec rampes de serrage pour le porte-cartouches, ladite cage de fixation étant coaxiale avec l'organe d'injection et dans lequel l'axe des trous de l'organe d'injection fait un angle compris entre 0 et 25° avec l'horizontale et la surface circulaire sur le pourtour de l'organe d'injection présente un alésage circulaire concentrique avec ledit organe d'injection.

La surface circulaire présente un alésage circulaire concentrique avec l'organe d'injection, en particulier dans le cas d'extraction d'une capsule avec une face supérieure bombée. En tout état de cause, la surface est toujours plane dans la zone où se fait l'étanchéité de la capsule, c'est-à-dire dans la zone proche de la périphérie des capsules.

L'organe d'injection est constitué par une aiguille d'injection qui assure la double fonction de perforation de la face supérieure de la cartouche et d'injection d'eau. L'organe d'injection comporte entre 1 et 10 trous, de préférence entre 4 et 8, répartis uniformément sur le pourtour dudit organe et éventuellement sur 2 niveaux. L'axe des trous de l'organe d'injection fait un angle compris entre 0 et 25° avec l'horizontale. Par horizontale, on entend le plan formé par la surface circulaire plane.

Par angle, on entend l'angle formé au-dessus du plan de l'horizontale. L'eau est ainsi orientée, grâce à la géométrie des trous de l'aiguille vers le haut de la capsule de manière à être bien répartie sur toute la surface de la capsule, après réflexion sur le haut de la capsule (ou cartouche).

L'orientation des trous de l'aiguille d'injection est favorable, car elle permet l'utilisation de capsules ayant des tailles et rapports hauteur/diamètre variables et en particulier faibles (de 1 à 0,12) et des lits de café relativement peu compactés.

En effet, en étant dirigée légèrement vers le haut, l'eau injectée par les quelques trous de l'aiguille se réfléchit sur la zone supérieure de la capsule et est renvoyée vers le lit de café en étant beaucoup plus dispersée. Ainsi, l'eau rentre au contact du lit de café après dispersion partielle et non plus sous forme de quelques jets localisés.

Ce phénomène est important durant les premières secondes de l'extraction alors que le lit de café n'est pas stabilisé. De plus, cette dispersion est favorable si l'on souhaite une dispersion et réduction de l'énergie cinétique de l'eau injectée afin de ne pas compacter trop fortement le lit de café et éviter ainsi un risque de colmatage du lit de café sous une trop grande pression. En ce compactant légèrement, le lit de café dégage de la place dans la capsule qui est alors prise par l'eau.

Ensuite, pendant le reste de l'extraction, les jets d'eau sont libérés plus ou moins dans ce volume d'eau et en aucun cas, les jets ne sont dirigés directement sur le café.

Les trous de l'organe d'injection ont un diamètre compris entre 0,2 et 1,5 mm. Il faut qu'ils soient suffisamment longs pour permettre une bonne arrivée de l'eau sous une pression pouvant aller jusqu'à 20 bar et pas trop gros cependant pour éviter tout risque de reflux du marc en fin d'extraction.

Pour être sûr d'une bonne pénétration de l'eau dans la cartouche lors de l'extraction, les trous de l'organe d'injection sont disposés à une distance comprise entre 3 et 8 mm de la surface circulaire.

La distance séparant le bas de l'organe d'injection et le rebord inférieur de la rampe de serrage est au moins égale à l'épaisseur de la rampe de serrage, par exemple d'au moins 5 mm et pouvant aller jusqu'à 25 mm, selon les configurations des porte-capsules et des capsules. Le but est d'avoir une déchirure minimale et la plus nette possible de la face supérieure de la cartouche à extraire de manière à éviter le souillage du dispositif d'extraction par le marc de café lors du dégagement de la capsule après extraction.

Pour maintenir la cartouche dans le dispositif d'extraction, on a recours à un porte-capsules dont la géométrie intérieure est variable selon la grandeur des capsules employées. Il comporte deux pattes de serrage, diamétralement opposées et prévues pour s engager sur les rampes de serrage de la cage de fixation. L'ouverture des rampes de serrage doit être la plus petite possible par rapport à la largeur des pattes de serrage du porte-cartouche pour favoriser un meilleur centrage de la capsule avant qu'elle soit perforée par l'organe d'injection d'eau. L'étanchéité du dispositif d'extraction, après serrage du porte-cartouches dans la cage de fixation, se fait par compression de la couronne extérieure des capsules contre la surface circulaire plane du dispositif selon l'invention. Cette surface circulaire est en une matière assurant une bonne étanchéité, soit une matière souple, telle que du caoutchouc naturel ou synthétique, soit en une matière rigide telle que inox revêtu de PTFE (téflon) ou du PTFE chargé.

L'utilisation, à partir du même dispositif d'extraction, de plusieurs types ou tailles de capsules, est rendue possible en utilisant des porte-capsules dont la partie intérieure est spécifique de la capsule tandis que la partie extérieure, commune à tous les modèles, est compatible avec la cage de fixation.

En particulier, on peut employer les capsules faisant l'objet de la demande de brevet européen déposée par la demanderesse sous le n° 90114404 et sous le titre "Cartouche fermée pour la confection d'une boisson, son procédé et son dispositif de fabrication".

On peut aussi employer le dispositif d'extraction faisant l'objet de la demande de brevet européen déposée par la demanderesse sous le No. 90114401 et sous le titre "Procédé d'extraction de cartouches fermées et dispositif pour sa mise en oeuvre".

Après extraction, le dégagement des capsules est réalisé facilement: desserrage du porte-capsules et dégagement de la capsule par simple retournement du porte-capsules.

La suite de la description est faite en référence aux dessins sur lesquels:
Fig. 1 est une coupe du dispositif selon l'invention,
Fig. 2 est une vue de dessous du dispositif selon la Fig. 1 et
Fig. 3 est une coupe du système complet d'extraction de cartouches avec le dispositif de la Fig. 1.

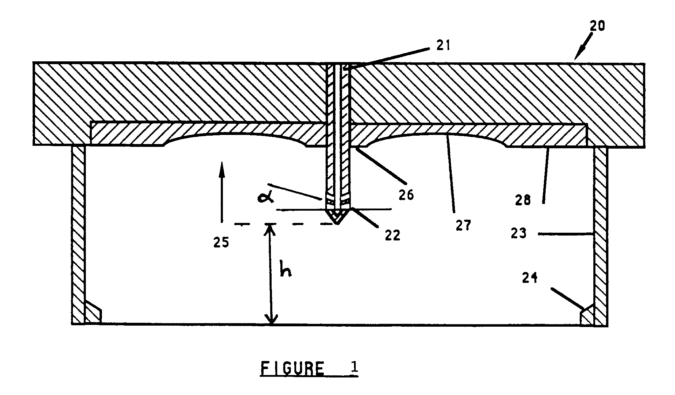

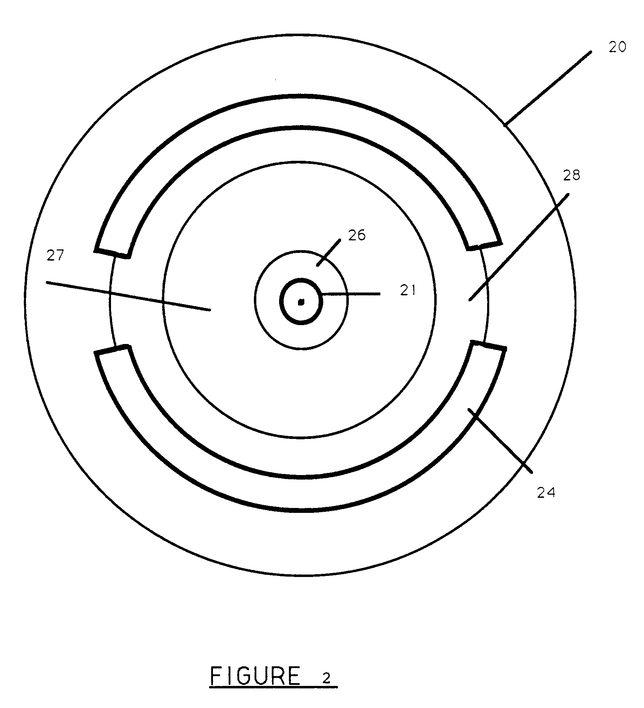

Les Fig. 1 et 2 montrent une forme de réalisation du dispositif selon l'invention. Ce dispositif (20) comprend un organe d'injection d'eau (21) comportant des trous ou orifices (22) de sortie d'eau faisant un angle α avec l'horizontale. Dans le cas de la Fig. 1, cet angle est de 20°. Il comprend en outre une cage de fixation (23) avec rampes de serrage (24) et sur le pourtour de l'organe d'injection (21) une surface circulaire (25). Cette surface est divisée en trois zones: deux parties planes, l'une au centre (26) et l'autre sur la périphérie (28) et un alésage circulaire (27) prévu dans le cas de l'extraction de capsule présentant une face supérieure bombée. La zone extérieure (28) doit être plane pour assurer une bonne étanchéité lors de l'extraction. La zone plane (26) est nécessaire, car lors du perçage de la capsule, on déforme la membrane supérieure vers le bas, cette zone (26) compensant ladite déformation, pour éviter le reflux de marc lors du dégagement de la capsule après extraction.

On a représenté en outre sur la Fig. 1 la distance entre le bas de l'organe d'injection et le rebord inférieur de la rampe de serrage de la cage de fixation. Dans le cas de cette configuration h = 10 mm.

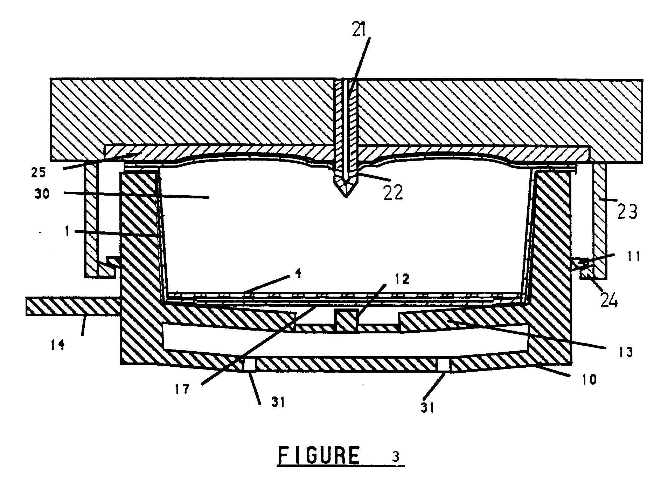

Le système complet d'extraction (Fig. 3) comprend en outre un porte-cartouches (10) avec deux pattes de serrage (11) venant se loger sur les rampes (24). Le porte-cartouches comporte un logement pour la cartouche (1) et sous ce logement un pointeau central fixe (12) et des ailettes radiales (13) supportant la paroi inférieure (17) et le filtre (4) de la cartouche à extraire. La poignée (14) permet un maniement aisé du porte-cartouches.

On met en place la cartouche (1) contenant le café (30) dans le porte-cartouches (10) et on l'engage dans la cage de fixation (23), l'organe d'injection d'eau (21) venant percer la face supérieure de la cartouche (1).

L'eau arrive par les orifices (22) de l'organe d'injection d'eau (21) et mouille tout le lit de café (30). Sous l'effet de la pression d'eau la face inférieure (17) de la cartouche se déforme et vient appuyer contre le pointeau central (12). La face se déchire lorsqu'elle atteint sa tension de rupture. Le filtre (4) se déforme également, mais il a une épaisseur telle qu'il ne se déchire pas. L'extraction proprement dite peut alors commencer. Le café sort par les orifices (31) du porte-cartouche (10).

La surface (25) en caoutchouc garantit une bonne étanchéité lors de l'extraction et les orifices (22) orientés vers le haut de la capsule permettent un bon mouillage du lit de café.

## Revendications

1. Dispositif d'extraction de cartouches fermées, prévues pour la confection d'une boisson, dans un porte-cartouches pour machine à café, comprenant un organe d'injection (21) et sur le pourtour de l'organe d'injection une surface circulaire (25) perpendiculaire audit organe d'injection et constituée d'une matière assurant l'étanchéité lors de l'extraction de la cartouche fermée caractérisé en ce qu'il comprend une cage de fixation (23) avec rampes de serrage (24) pour le porte-cartouches, ladite cage de fixation étant coaxiale avec l'organe d'injection, en ce que l'axe des trous (22) de l'organe d'injection fait un angle compris entre 0 et 25° avec l'horizontale et en ce que la surface circulaire sur le pourtour de l'organe d'injection présente un alésage circulaire (27) concentrique avec ledit organe d'injection.

2. Dispositif selon la revendication 1, caractérisé en ce que la surface circulaire (26) sur le pourtour de l'organe d'injection est plane.

3. Dispositif selon l'une des revendications 1 ou 2, caractérisé en ce que l'organe d'injection (21) comporte entre 1 et 10 trous, de préférence 4 à 8.

4. Dispositif selon l'une des revendications 1 à 3, caractérisé en ce que les trous (22) de l'organe d'injection ont un diamètre compris entre 0,2 et 1,5 mm.

5. Dispositif selon l'une des revendications 1 à 4, caractérisé en ce que les trous (22) de l'organe d'injection sont disposés à une distance comprise entre 3 et 8 mm de la surface circulaire.

6. Dispositif selon l'une des revendications 1 à 5, caractérisé en ce que la distance (h) entre le bas de l'organe d'injection et le rebord inférieur de la rampe de serrage est compris entre 5 et 25 mm.

7. Dispositif selon l'une des revendications 1 à 6, caractérisé en ce que la matière de la surface circulaire plane (25) est du caoutchouc ou de l'acier téflonisé.

## Claims

1. A device for the extraction of sealed cartridges designed for the preparation of a beverage in a cartridge holder for coffee machines, comprising an injector (21) and, around the periphery of the injector, a circular surface (25) perpendicular to the injector and consisting of a material designed to ensure imperviousness during the extraction of the sealed cartridge, characterized in that it comprises a fixing cage (23) with retaining ramps (24) for the cartridge holder, the fixing cage being coaxial with the injector, in that the axis of the holes (22) of the injector forms an angle of 0 to 25° with the horizontal and in that the circular surface at the periphery of the injector has a circular bore (27) concentric with the injector.

2. A device as claimed in claim 1, characterized in that the circular surface (26) at the periphery of the injector is flat.

3. A device as claimed in claim 1, characterized in that the injector (21) comprises between one and ten holes and preferably four to eight holes.

4. A device as claimed in any of claims 1 to 3, characterized in that the holes (22) of the injector are between 0.2 and 1.5 mm in diameter.

5. A device as claimed in any of claims 1 to 4, characterized in that the holes (22) of the injector are situated at a distance of 3 to 8 mm from the circular surface.

6. A device as claimed in any of claims 1 to 5, characterized in that the distance (h) between the bottom of the injector and the lower edge of the retaining ramp is between 5 and 25 mm.

7. A device as claimed in any of claims 1 to 6, characterized in that the constituent material of the flat circular surface (25) is rubber or teflonized steel.

## Patentansprüche

1. Vorrichtung zum Aufbrühen von geschlossenen Portionspackungen für die Zubereitung eines Getränks in einem Portionspackungshalter für eine Kaffeemaschine, umfassend ein Einspritzorgan (21) und am Umfang des Einspritzorgans eine zu diesem Einspritzorgan senkrechte, kreisförmige Fläche (25), die aus einem Werkstoff besteht, der beim Aufbrühen der geschlossenen Portionspackung die Abdichtung gewährleistet, dadurch gekennzeichnet, daß sie einen Befestigungskäfig (23) mit Klemmrampen (24) für den Portionspackungshalter besitzt, wobei dieser Befestigungskäfig zu dem Einspritzorgan koaxial ist, daß die Achse der Löcher (22) des Einspritzorgans mit der Horizontalen einen Winkel von 0 bis 25° bildet und daß die kreisförmige Fläche am Umfang des Einspritzorgans eine kreisförmige Vertiefung (27) aufweist, die zu dem Einspritzorgan konzentrisch ist.

2. Vorrichtung nach Anspruch 1, dadurch gekennzeichnet, daß die kreisförmige Fläche (26) am Umfang des Einspritzorgans eben ist.

3. Vorrichtung nach einem der Ansprüche 1 oder 2, dadurch gekennzeichnet, daß das Einspritzorgan (21) 1 bis 10, vorzugsweise 4 bis 8 Löcher besitzt.

4. Vorrichtung nach einem der Ansprüche 1 bis 3, dadurch gekennzeichnet, daß die Löcher (22) des Einspritzorgans einen Durchmesser von 0,2 bis 1,5 mm haben.

5. Vorrichtung nach einem der Ansprüche 1 bis 4, dadurch gekennzeichnet, daß die Löcher (22) des Einspritzorgans in einem Abstand von 3 bis 8 mm von der kreisförmigen Fläche entfernt angeordnet sind.

6. Vorrichtung nach einem der Ansprüche 1 bis 5, dadurch gekennzeichnet, daß der Abstand (h) des unteren Endes des Einspritzorgans vom unteren abgewinkelten Rand der Klemmrampe 5 bis 25 mm beträgt.

7. Vorrichtung nach einem der Ansprüche 1 bis 6, dadurch gekennzeichnet, daß der Werkstoff der kreisförmigen ebenen Fläche (25) Gummi oder mit Teflon beschichteter Stahl ist.
